# EUROPEAN PATENT APPLICATION

(11) **EP 3 015 978 A1**
(43) Date of publication of application: **04.05.2016**
(21) Application number: 14818499.7
(22) Date of filing: 20.02.2014
(51) Int. Cl.: G06F 9/44

(54) **GESTURE-BASED CONVERSATION PROCESSING METHOD, APPARATUS, AND TERMINAL DEVICE**

(30) Priority: 24.06.2013 CN 201310253279
(71) Applicant: Xiaomi Inc., Beijing 100085 (CN)
(72) Inventor: WANG, Bin, Beijing 100085 (CN); LIU, Daokuan, Beijing 100085 (CN); WENG, Haibin, Beijing 100085 (CN)
(74) Representative: Perrot, Emilie
(86) International application number: PCT/CN2014/072327
(87) International publication number: WO 2014/206101

(57) **Abstract**

Disclosed are a method, device, and terminal apparatus for processing a session based on a gesture operation. The method comprises: monitoring a gesture operation in a current session interface; when a gesture operation on any session in the current session interface is monitored, identifying the gesture operation; and performing a corresponding processing on the session in the current session interface according to the identified gesture operation. Therefore, an operation may be performed on a session on a current session interface without entering a session operation interface, thereby shortening a session processing procedure, saving processing time, further facilitating user operations, and enhancing user stickiness.

## Description

### CROSS REFERENCE TO RELATED APPLICATION

The present application is based upon and claims priority to Chinese Patent Application No. 201310253279.X filed on June 24, 2013, the entire contents of which are incorporated herein by reference.

### TECHNICAL FIELD

The present invention relates to the field of communication technology, and particularly to a method, a device and a terminal apparatus for processing a session based on a gesture.

### BACKGROUND

With the development of technology, people's requirements to display Internet products and even software products become higher and higher. Nowadays, contact modes of people have gradually come out of conventional modes such as telephones, short messages, etc., whereas network social software are used more and more, and the widely used contact mode is instant chat.

Instant chat refers to a contact mode in which people can discuss some topics of common interest with other similar players in a network by certain software. When instant chat tools are used, a user may communicate with friends in manners of text, audio and video. In general, conversions with each friend are within individual sessions, thus uniqueness, target accuracy and conversation privacy of the conversations can be guaranteed. When a user joins in a session group, if any friend in the same group speaks, the user at the local terminal may receive his/her speech, such that a session group may facilitate to improve social activity of users.

However, when a session is operated, a user must enter into the session to perform operations of reading, deleting, forwarding or the like. When a user chats with several friends at the same time, it is required to switch session pages frequently. At present, such processings to the sessions result in that procedures for processing the sessions are long, efficiency thereof is low, and that it is not convenient for user operations.

### SUMMARY

In order to solve the problems of the Background, embodiments of the present invention provide a method, a device and a terminal apparatus for processing a session based on a gesture operation.

According to a first aspect of the embodiments of the present invention, a method for processing a session based on a gesture operation is provided, and the method includes:
monitoring a gesture operation in a current session interface;
when a gesture operation in any session in the current session interface is monitored, identifying the gesture operation; and
performing a corresponding processing on the session in the current session interface according to the identified gesture operation.

Preferably, the gesture operation includes a single-finger sliding leftward, a single-finger sliding rightward, a multi-finger sliding leftward, a multi-finger sliding rightward, a single-finger sliding upward, a single-finger sliding downward, a multi-finger sliding upward, a multi-finger sliding downward, a single-finger clicking, a multi-finger clicking, a single-finger pressing and/or a multi-finger pressing.

Preferably, the method further includes:
presetting a standard gesture operation and a processing corresponding to the standard gesture operation; and
the step of identifying the gesture operation includes:
   comparing the monitored gesture operation and the preset standard gesture operation;
   if the monitored gesture operation and the preset standard gesture operation match, determining that the gesture operation is identified; and
   if the monitored gesture operation and the preset standard gesture operation do not match, determining that the gesture operation is not identified.

Preferably, after the step of identifying the gesture operation, the method further includes determining validity of the gesture operation.

Preferably, when the gesture operation is a single-finger sliding leftward, a single-finger sliding rightward, a multi-finger sliding leftward, a multi-finger sliding rightward, a single-finger sliding upward, a single-finger sliding downward, a multi-finger sliding upward, or a multi-finger sliding downward, the step of determining the validity of the gesture operation includes:
obtaining a sliding distance of the session in its own area caused by the gesture operation;
determining whether the sliding distance exceeds a sliding distance threshold;
if the sliding distance exceeds the sliding distance threshold, determining that the gesture operation is valid; and
if the sliding distance does not exceed the sliding distance threshold, determining that the gesture operation is invalid.

Preferably, when the gesture operation is a single-finger clicking or a multi-finger clicking, the step of determining the validity of the gesture operation includes:
obtaining a click number of times within a predetermined time of the gesture operation;
determining whether the click number of times of the gesture operation exceeds a click number of times threshold;
if the click number of times exceeds the click number of times threshold, determining that the gesture operation is invalid; and
if the click number of times does not exceed the click number of times threshold, determining that the gesture operation is valid.

Preferably, when the gesture operation is a single-finger pressing or a multi-finger pressing, the step of determining the validity of the gesture operation includes:
obtaining a voltage value generated by the gesture operation; determining whether the voltage value generated by the gesture operation exceeds a voltage threshold; if the voltage value exceeds the voltage threshold, determining that the gesture operation is valid; and if the voltage value does not exceed the voltage threshold, determining that the gesture operation is invalid; or
when a display screen for displaying the current session interface is a flexible screen, obtaining a depth value generated by a pressing gesture operation in a pressing direction; determining whether the depth value generated by the pressing gesture operation exceeds a depth threshold, if the depth value exceeds the depth threshold, determining that the gesture operation is valid, and if the depth value does not exceed the depth threshold, determining that the gesture operation is invalid.

Preferably, the step of performing the corresponding processing on the session in the current session interface according to the identified gesture operation includes:
when the identified gesture operation is to mark the session as read, updating a state of the session as read; or
when the identified gesture operation is to mark the session as to be deleted, deleting the session from the current session interface; or
when the identified gesture operation is to mark the session as to be forwarded, popping up a forwarding page of the session; or
when the identified gesture operation is to mark the session as to be placed at top, placing the session at top of the current session interface and displaying it.

Preferably, the step of performing the corresponding processing on the session in the current session interface according to the identified gesture operation includes:
when the identified gesture operation is to open a secondary option, moving the session in its own area leftward, rightward, upward or downward, and displaying the secondary option in the area that the session passed;
wherein the secondary option includes an operation option with respect to the session, an operation option with respect to the current interface in which the session is located or an operation option with respect to an application software to which the session belongs.

According to a second aspect of the embodiments of the present invention, a device for processing a session based on a gesture operation is provided, and the device includes:
a monitoring module configured to monitor the gesture operation in a current session interface;
an identifying module configured to, when a gesture operation in any session in the current session interface is monitored, identify the gesture operation; and
a processing module configured to perform a corresponding processing on the session in the current session interface according to the identified gesture operation.

Preferably, the device further includes a determining module configured to determine validity of the gesture operation.

Preferably, when the gesture operation identified by the identifying module is to mark the session as read, the processing module updates a state of the session as read; or
when the gesture operation identified by the identifying module is to mark the session as to be deleted, the processing module deletes the session from the current session interface; or
when the gesture operation identified by the identifying module is to mark the session as to be forwarded, the processing module pops up a forwarding page of the session; or
when the gesture operation identified by the identifying module is to mark the session as to be placed at top, the processing module places the session at top of the current session interface and displays it.

Preferably, when the gesture operation identified by the identifying module is to open a secondary option, the processing module moves the session in its own area leftward, rightward, upward or downward, and displays the secondary option in the area that the session passed;
wherein the secondary option includes an operation option with respect to the session, an operation option with respect to the current interface in which the session is located or an operation option with respect to an application software to which the session belongs.

According to a third aspect of the embodiments of the present invention, a terminal apparatus is provided, the terminal apparatus including a storage and one or more programs, wherein the one or more programs are stored in the storage and are configured to be executed by one or more processors, the one or more programs including instructions for performing operations of:
monitoring a gesture operation in a current session interface;
when a gesture operation in any session in the current session interface is monitored, identifying the gesture operation; and
performing a corresponding processing on the session in the current session interface according to the identified gesture operation.

In the method, the device and the terminal apparatus for processing a session based on a gesture operation provided by the embodiments of the present invention, a gesture operation in a current session interface is monitored, and a corresponding processing is performed to the session in the current session interface according to the identified gesture operation. Therefore, operations can be performed to a session in a current session interface without entering into the operating interface of the session, which shortens the procedure for processing the session, saves processing time, and achieves more convenience for user operations.

Other features and advantages of the present invention will be explained in the following description, and part of which will become obvious from the description, or may be understood by carrying out the present invention. Purposes and other advantages of the present invention may be achieved and obtained by structures particularly pointed out in the written description, claims and the accompanying drawings.

### BRIEF DESCRIPTION OF THE DRAWINGS

The accompanying drawings, which hereby are incorporated in and constitute a part of this specification, illustrate embodiments that conform to the present invention, and together with the specification serve to explain the principles of the present invention.
FIG. 1 is an illustrative flowchart of a method for processing a session based on a gesture operation according to an embodiment of the present invention;
FIG. 2 is an illustrative flowchart of a procedure for determining validity of a sliding gesture according to an embodiment of the present invention;
FIG. 3a is an illustrative diagram of a state of an invalid sliding gesture according to an embodiment of the present invention;
FIG. 3b is an illustrative diagram of a state of a valid sliding gesture according to an embodiment of the present invention;
FIG. 4 is an illustrative flowchart of a procedure for determining validity of a clicking gesture according to another embodiment of the present invention;
FIG. 5 is an illustrative flowchart of a procedure for determining validity of a pressing gesture according to another embodiment of the present invention;
FIG. 6 is an illustrative flowchart of a procedure for determining validity of a pressing gesture according to another embodiment of the present invention;
FIG. 7 is an illustrative diagram of a state of a pressing gesture according to an embodiment of the present invention;
FIGS. 8a-8c are illustrative diagrams of sliding rightward to mark a read state according to an embodiment of the present invention;
FIGS. 9a-9c are illustrative diagrams of placing a session having an unread message at top according to an embodiment of the present invention;
FIG. 10 is an illustrative diagram of sliding a session leftward to display a secondary option according to an embodiment of the present invention;
FIG. 11 is an illustrative flowchart of a method for processing a session based on a gesture operation according to an embodiment of the present invention, wherein a single-finger sliding rightward to change a mark of the session is described as an example;
FIG. 12 is an illustrative flowchart of a method for processing a session based on a gesture operation according to an embodiment of the present invention, wherein a single-finger pressing downward to display a secondary option is described as an example;
FIG. 13 is an illustrative diagram of sliding upward on a session to display a secondary option according to an embodiment of the present invention;
FIG. 14 is an illustrative flowchart of a method for processing a session based on a gesture operation according to an embodiment of the present invention, wherein a gesture operation of two-fingers sliding downward to place an unread session at top is described as an example;
FIG. 15 is an illustrative functional block diagram of a device for processing a session based on a gesture option according to an embodiment of the present invention; and
FIG. 16 is an illustrative block diagram of a terminal apparatus according to an embodiment of the present invention.

### DETAILED DESCRIPTION

Hereinafter, embodiments consistent with the invention will be described with reference to the drawings. Wherever possible, the same reference numbers will be used throughout the drawings to refer to the same or like parts.

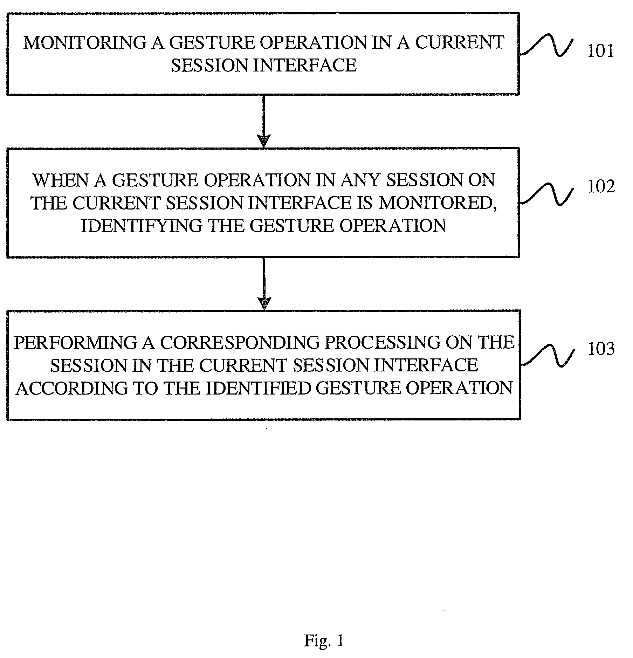

Fig.1 is an illustrative flowchart of a method for processing a session based on a gesture operation according to an embodiment of the present invention. With reference to Fig.1, the method includes:
in step 101, monitoring a gesture operation in a current session interface;
in step 102, when a gesture operation in any session in the current session interface is monitored, identifying the gesture operation; and
in step 103, performing a corresponding processing on the session in the current session interface according to the identified gesture operation.

In an embodiment, the gesture operation includes a single-finger sliding leftward, a single-finger sliding rightward, a multi-finger sliding leftward, a multi-finger sliding rightward, a single-finger sliding upward, a single-finger sliding downward, a multi-finger sliding upward, a multi-finger sliding downward, a single-finger clicking, a multi-finger clicking, a single-finger pressing and/or a multi-finger pressing. The gesture operations cited hereby are only a portion of gesture operations that may be used in the embodiments of the present invention, other gesture operations capable of processing a session may also be used, for example, any gesture that may be sensed by a sensor without touching a touch screen.

In an embodiment, i.e., in another embodiment of the present invention, the method further includes presetting a standard gesture operation and a processing corresponding to the standard gesture operation;
the step of identifying the gesture operation includes comparing a monitored gesture operation with the preset standard gesture operation; if the monitored gesture operation and the preset standard gesture operation match, determining that the gesture operation is identified; and if the monitored gesture operation and the preset standard gesture operation do not match, determining that the gesture operation is not identified. For example, the preset standard gesture operation is a single-finger sliding, and the processing corresponding to the single-finger sliding is to put a session in a read state. So, when a gesture operation occurring on a current session interface is monitored being the single-finger sliding, it can be determined that the gesture operation is a gesture operation that can be identified.

In another embodiment of the present invention, after identifying a gesture operation, the method further includes: determining validity of the gesture operation.

In order to provide accuracy of a gesture operation and avoid an error operation, validity of the identified gesture operation may be determined.

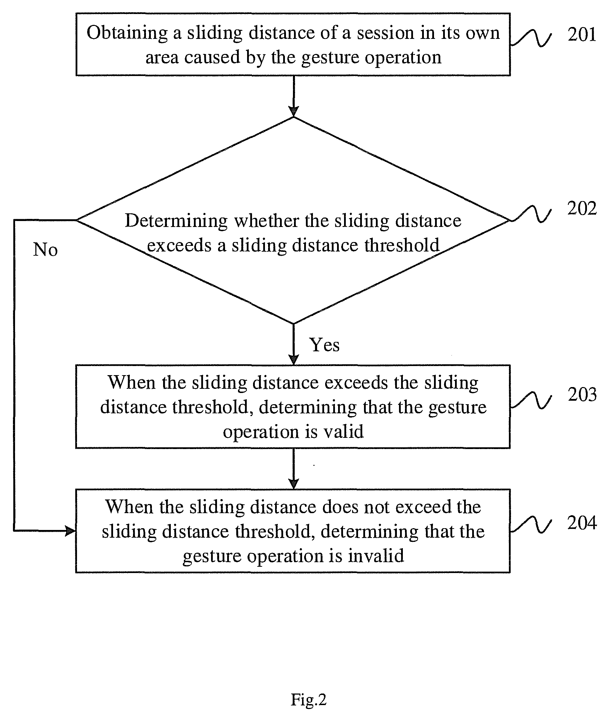

In another embodiment of the present invention, when a gesture operation is a single-finger sliding leftward, a single-finger sliding rightward, a multi-finger sliding leftward, a multi-finger sliding rightward, a single-finger sliding upward, a single-finger sliding downward, a multi-finger sliding upward, or a multi-finger sliding downward, as shown in Fig.2, the step of determining validity of the gesture operation includes:
in step 201, obtaining a sliding distance of a session in its own area caused by the gesture operation;
in step 202, determining whether the sliding distance exceeds a sliding distance threshold; if the sliding distance exceeds the sliding distance threshold, performing step 203; and if the sliding distance does not exceed the sliding distance threshold, performing step 204;
in step 203, when the sliding distance exceeds the sliding distance threshold, determining that the gesture operation is valid; and
in step 204, when the sliding distance does not exceed the sliding distance threshold, determining that the gesture operation is invalid.

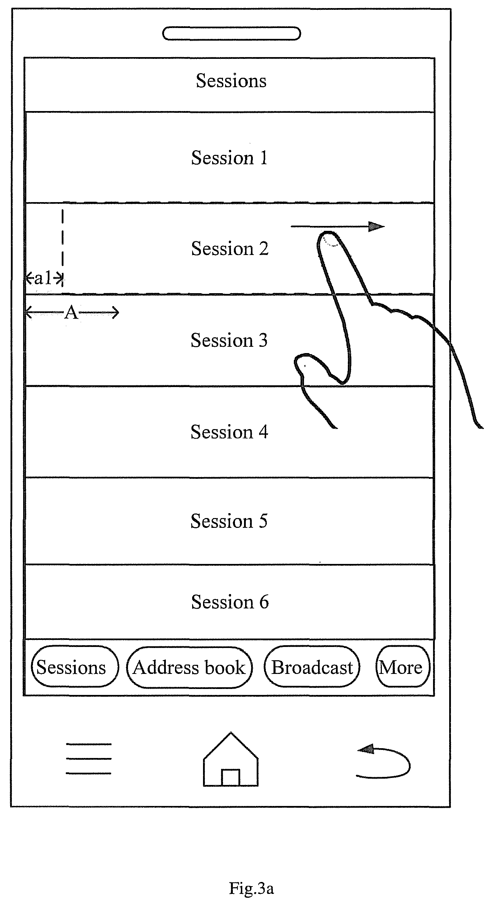

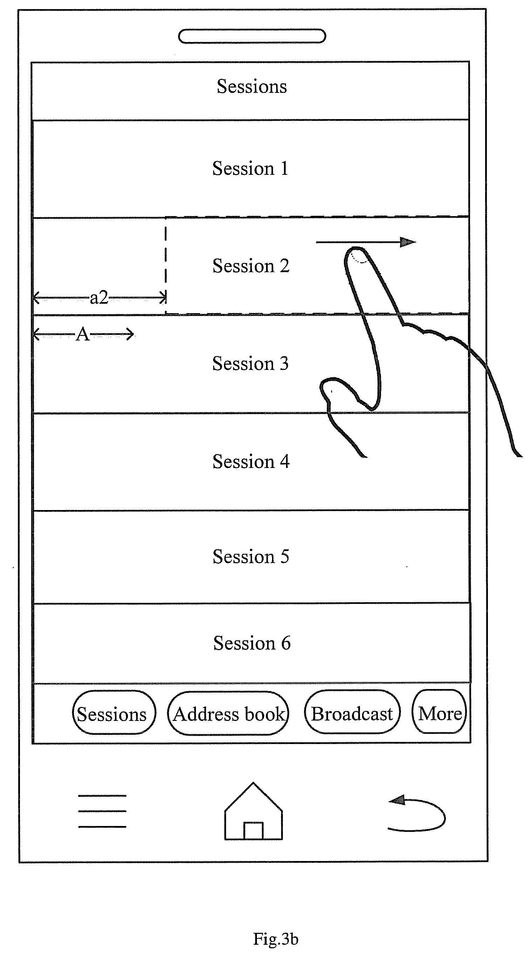

Taking a single-finger sliding rightward as an example, Fig.3a shows a sliding distance a1 of a session in its own area slid by a gesture operation which is less than a sliding distance threshold A, the gesture operation of the single-finger sliding rightward is thus determined to be invalid, and the gesture operation belongs to an error operation. Fig.3b shows a sliding distance a2 of a session in its own area slid by a gesture operation which is not less than the sliding distance threshold A, the gesture operation of the single-finger sliding rightward is thus determined to be valid, and the gesture operation belongs to a normal operation. Principles of determining the validity of a single-finger sliding leftward, a multi-finger sliding leftward, a multi-finger sliding rightward, a single-finger sliding upward, a single-finger sliding downward, a multi-finger sliding upward or a multi-finger sliding downward are the same as that of the single-finger sliding rightward, so verbosity is omitted here.

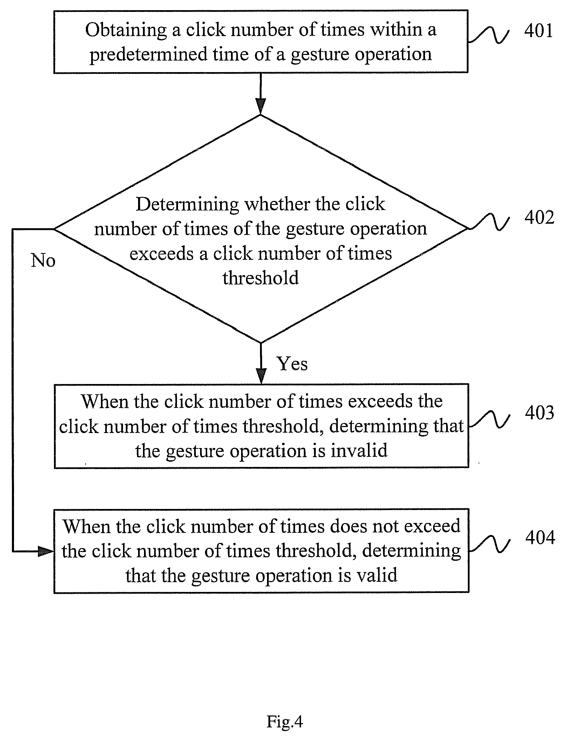

In another embodiment of the present invention, when a gesture operation is a single-finger clicking or a multi-finger clicking, as shown in Fig.4, the step of determining validity of the gesture operation includes:
in step 401, obtaining a click number of times within a predetermined time of the gesture operation;
in step 402, determining whether the click number of times of the gesture operation exceeds a click number of times threshold; if the click number of times of the gesture operation exceeds the click number of times threshold, performing step 403; and if the click number of times of the gesture operation does not exceed the click number of times threshold, performing step 404;
in step 403, when the click number of times exceeds the click number of times threshold, determining that the gesture operation is invalid; and
in step 404, when the click number of times does not exceed the click number of times threshold, determining that the gesture operation is valid.

Thus, by determining the click number of times, a normal operation and an error operation can be accurately distinguished.

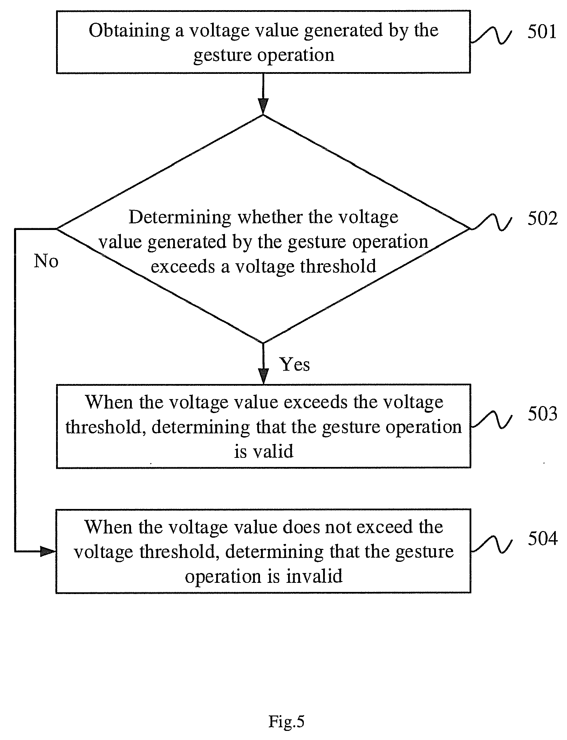

In another embodiment of the present invention, when a gesture operation is a single-finger pressing or a multi-finger pressing, as shown in Fig.5, the step of determining validity of the gesture operation includes:
in step 501, obtaining a voltage value generated by the gesture operation;
in step 502, determining whether the voltage value generated by the gesture operation exceeds a voltage threshold; if the voltage value generated by the gesture operation exceeds the voltage threshold, performing step 503; and if the voltage value generated by the gesture operation does not exceed the voltage threshold, performing step 504;
in step 503, when the voltage value exceeds the voltage threshold, determining that the gesture operation is valid; and
in step 504, when the voltage value does not exceed the voltage threshold, determining that the gesture operation is invalid.

When a finger of a person presses a touch screen, a voltage value in a circuit coupled with the touch screen varies, and by determining the value of the voltage, a normal operation and an error operation can be accurately distinguished.

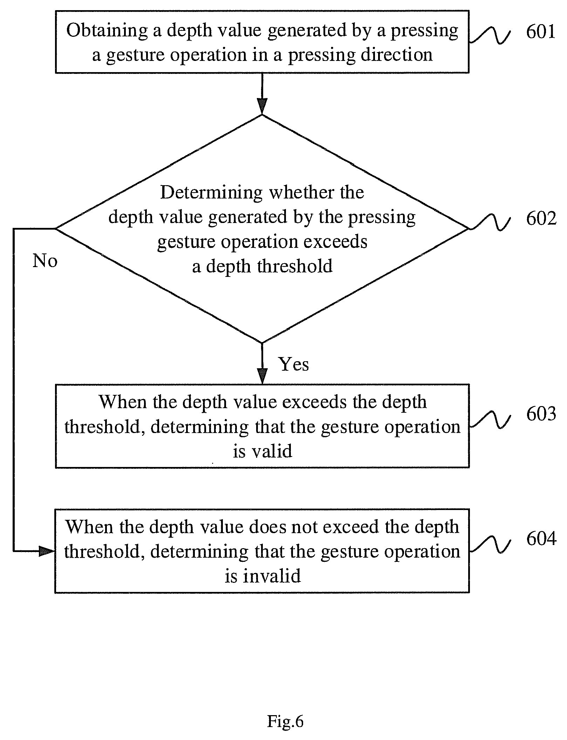

Or in another embodiment of the present invention, when a display screen for displaying a current session interface is a flexible screen, a process shown in Fig.6 may be adopted:
in step 601, obtaining a depth value generated by a pressing gesture operation in a pressing direction;
in step 602, determining whether the depth value generated by the pressing gesture operation exceeds a depth threshold; if the depth value generated by the pressing gesture operation exceeds the depth threshold, performing step 603; and if the depth value generated by the pressing gesture operation does not exceed the depth threshold, performing step 604;
in step 603, when the depth value exceeds the depth threshold, determining that the gesture operation is valid; and
in step 604, when the depth value does not exceed the depth threshold, determining that the gesture operation is invalid.

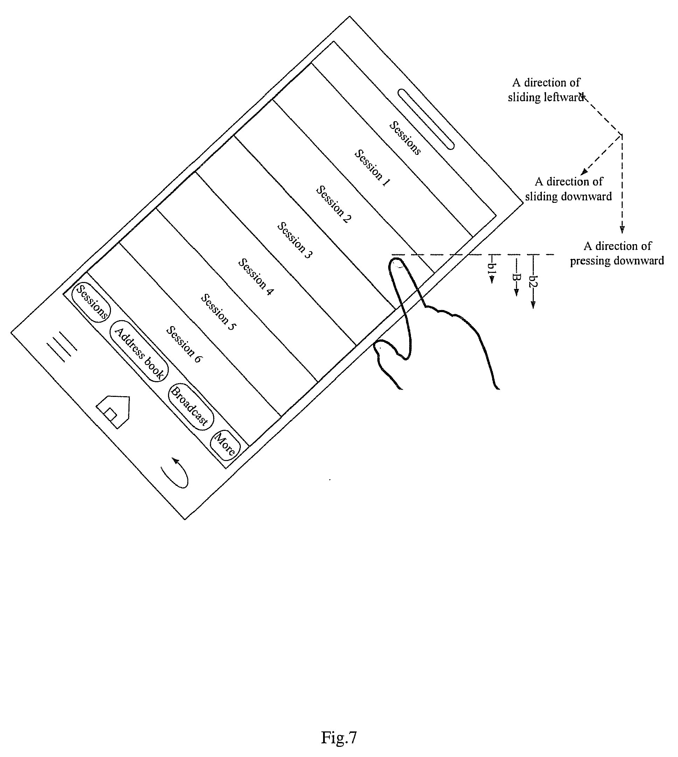

Taking a single-finger pressing downward as an example, as shown in Fig.7, if a depth value generated by a pressing gesture operation is b1 which is less than a depth threshold B, then the gesture operation of the single-finger pressing downward is determined to be invalid, and the gesture operation belongs to an error operation. When a depth value generated by a pressing of a gesture operation is b2 which is not less than the depth threshold B, the gesture operation of the single-finger pressing downward is determined to be valid, and the gesture operation belongs to a normal operation. Principles of determining the validity of a single-finger pressing or a multi-finger pressing in other directions are the same as that of the single-finger pressing downward, so verbosity is omitted here.

In one embodiment, the step of performing a corresponding processing on a session in a current session interface according an the identified gesture operation includes: when the identified gesture operation is to mark the session as read, updating a state of the session as read; or when the identified gesture operation is to mark the session as to be deleted, deleting the session from the current session interface; or when the identified gesture operation is to mark the session as to be forwarded, popping up a forwarding page of the session. Processing manners cited herein are only a portion of processing manners that may be used in the embodiments of the present invention, other processing manners may also be used, for example, a position of the session may be moved.

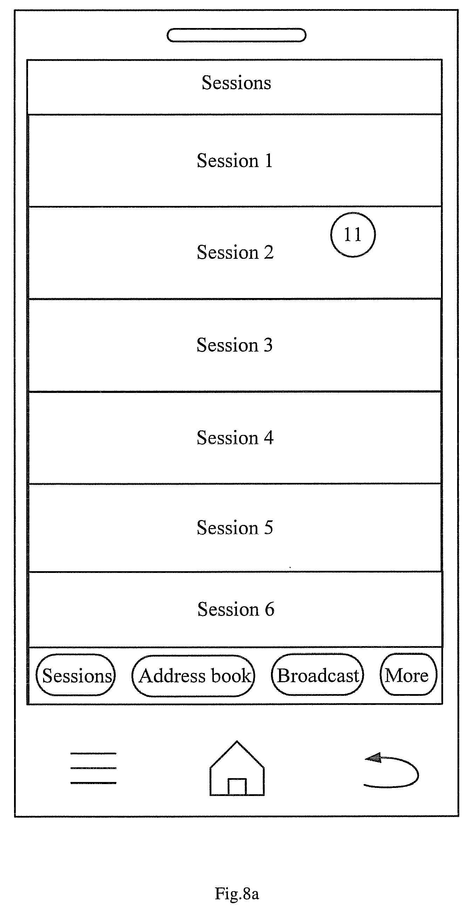

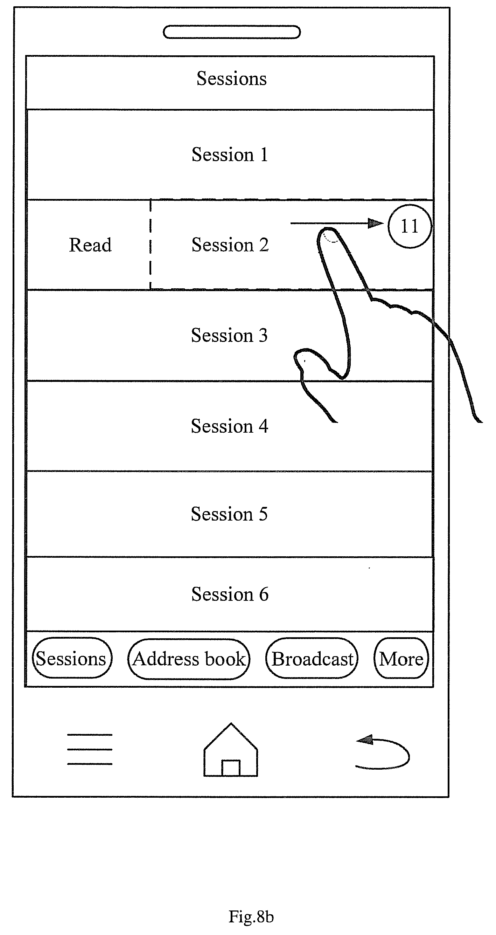

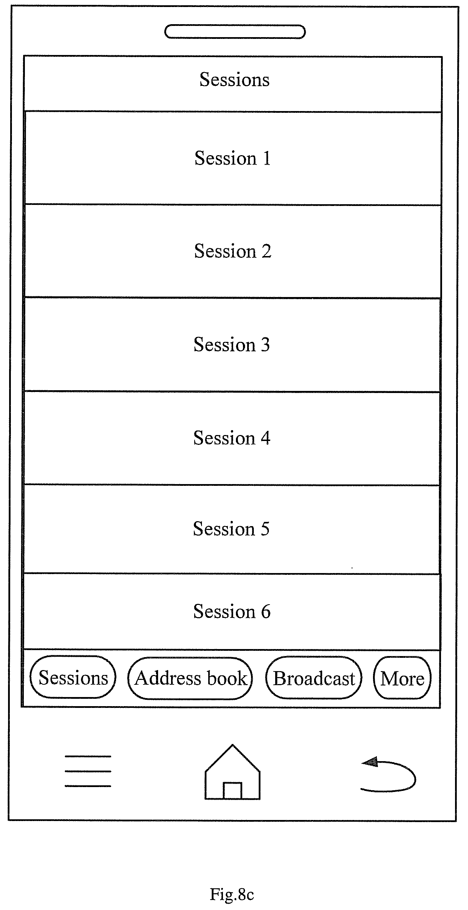

For example, in another embodiment of the present invention, as shown in Fig.8a, there is a session 2 having unread messages on a current session interface, and the session 2 has eleven unread messages. After a gesture operation with respect to the session having the unread massages is monitored and identified, if a result of a processing corresponding to the gesture operation (such as a single-finger sliding rightward) is to mark the session as "read", as shown in Fig.8b, while sliding the session rightward with a single-finger, word "read" may be displayed as a cue in an area that the session has moved through. In some embodiments, other means may be used as a cue, such as text, picture and/or animation may also be used as user prompt. As shown in Fig.8c, after the single-finger sliding rightward is ended, the session returns back to its original position, and a springback effect can be displayed after the session returns back to its original position. Then prompt information that marks the number of the unread messages disappears, and while the prompt information disappears, a form of sliding the prompt information leftward to make it disappear may be used, or a gradual variation disappearing manner may also be used.

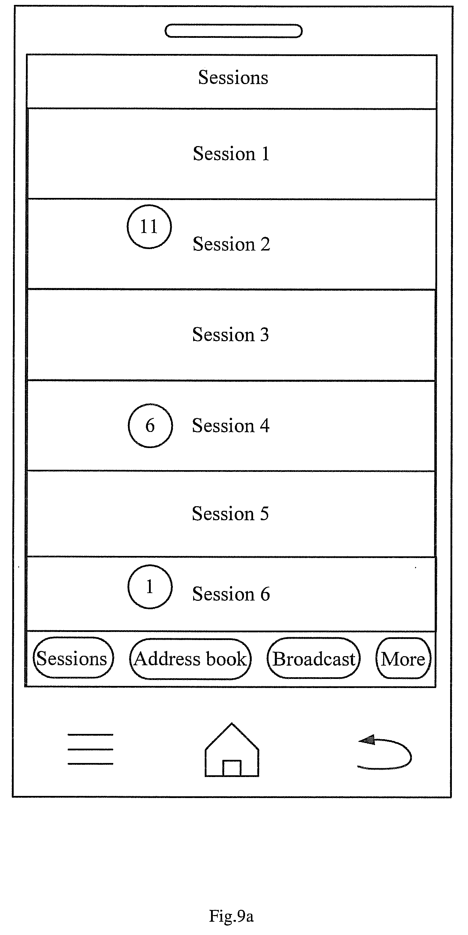

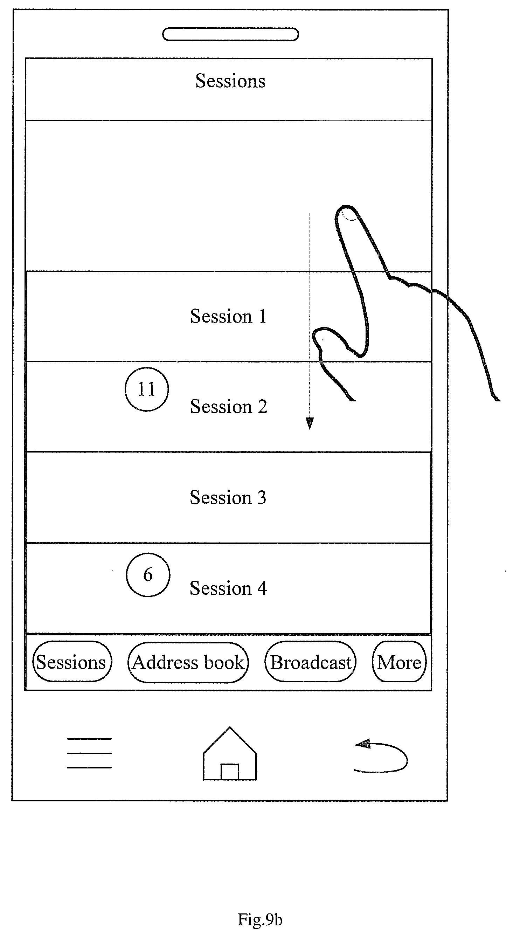

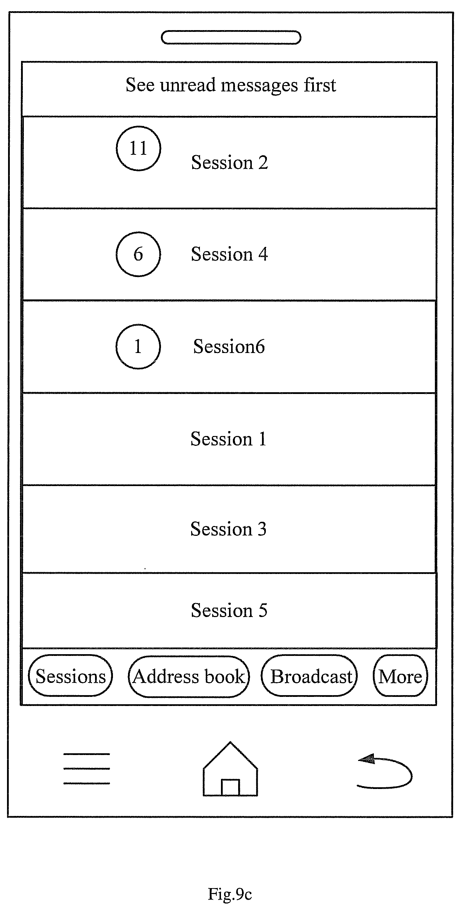

For example, in another embodiment of the present invention, shown in Fig.9a, sessions (session 2, session 4 and session 6) having unread messages are on a current session interface. After a gesture operation with respect to the sessions having the unread messages is monitored and identified, if a processing corresponding to the gesture operation (such as a single-finger downward sliding) is to place the unread sessions at the top of the display, as shown in Fig.9b, while the sessions are slid downward by a single-finger, the current session interface is moved downward as a whole. As shown in Fig.9c, after the single-finger downward sliding ends, the sessions having unread messages are placed at the top of the display, and user prompt indicating that the unread sessions are placed at top in a current state may also be displayed. In some embodiments, the single-finger downward sliding may be otherwise defined as placing a certain one or more sessions at top of the display. In other embodiments, another gesture operation, such as a two-fingers downward sliding, is defined as selecting a session and placing it at the top.

In another embodiment of the present invention, the step of performing a corresponding processing on a session in a current session interface according to an identified gesture includes: when the identified gesture operation is to open a secondary option, moving the session in its own area leftward, rightward, upward or downward, and displaying the secondary option in the area that the session passed; wherein the secondary option includes an operation option with respect to the session, an operation option with respect to the current interface in which the session is located or an operation option with respect to an application software to which the session belongs.

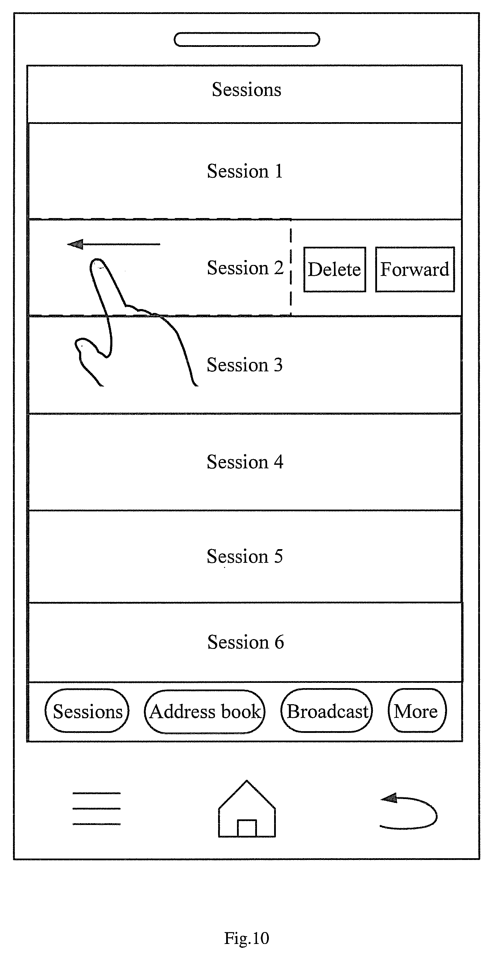

As shown in Fig.10, when a session is moved leftward by a gesture operation, one or more of secondary options such as "forward", "delete", "move", "search", "create a new session", "press to speak", "press to start video" are displayed in the area that the session passed. Another gesture operation may also be used to return the session back to its original position, for example, after a single-finger clicks the session, the session is moved back to its original position and covers the secondary options.

All of the above alternative technical solutions may be combined in any form to form alternative embodiments of the present invention, so verbosity is omitted here.

Therefore, in the method for processing a session based on a gesture operation provided by the embodiments of the present invention, a gesture operation in a current session interface is monitored, and a corresponding processing is performed to the session in the current session interface according to the identified gesture operation. Therefore, operations can be performed to a session in a current session interface without entering into the operating interface of the session, which shortens the procedure for processing the session, saves processing time, and achieves more convenience for user operations.

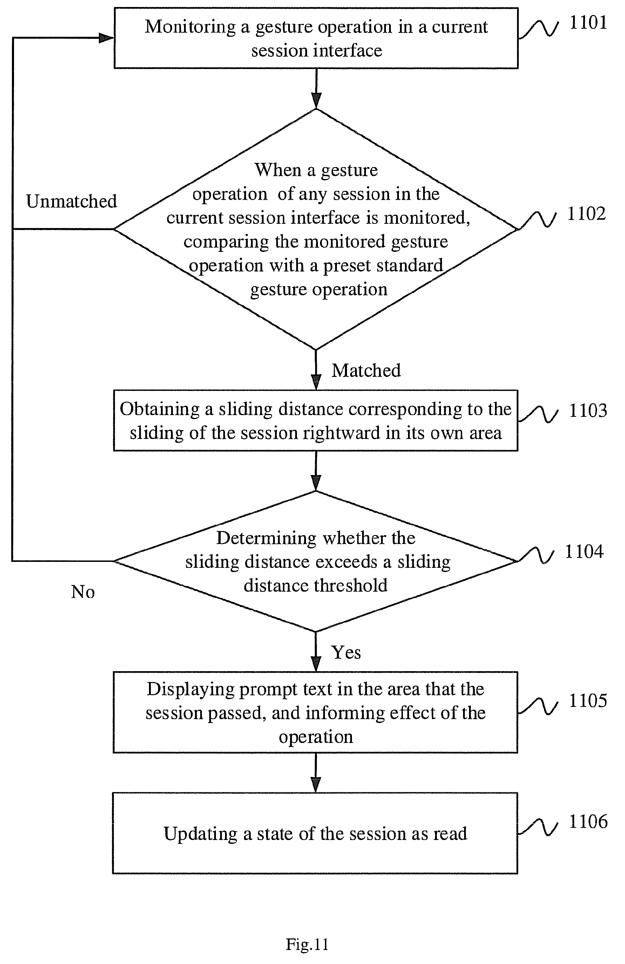

Fig.11 is a flowchart of a method for processing a session based on a gesture operation according to an embodiment of the present invention. Taking a single-finger sliding rightward to change a mark of the session as an example, the method includes:
in step 1101, monitoring a gesture operation in a current session interface;
in step 1102, when a gesture operation of any session in the current session interface is monitored, comparing the monitored gesture operation with a preset standard gesture operation; when the monitored gesture operation and the preset standard gesture operation match, determining that the single-finger sliding rightward is identified, and performing step 1103; and if the monitored gesture operation and the preset standard gesture operation do not match, determining that the gesture operation is not identified, and performing step 1101;
in step 1103, obtaining a sliding distance corresponding to the sliding of the session rightward in its own area;
in step 1104, determining whether the sliding distance exceeds a sliding distance threshold; when the sliding distance exceeds the sliding distance threshold, determining that the gesture operation is valid, and performing step 1105; and when the sliding distance does not exceed the sliding distance threshold, determining that the gesture operation is invalid, and performing step 1101. Effects of step 1104 are shown in Figs.3a and 3b;
in step 1105, displaying a prompt text in the area that the session passed, and informing effect of the operation. Effect picture of this step may be referred to in Fig.8b;
in step 1106, updating a state of the session as read. Effect picture of this step may be referred to in Fig.8c.

Therefore, in the method for processing a session based on a gesture operation according to the embodiments of the present invention, a gesture operation in a current session interface is monitored, and a corresponding processing is performed to the session in the current session interface according to the identified gesture operation. Operations can be performed to a session in a current session interface without entering into an operating interface of the session, which shortens the procedure for processing the session, saves processing time, and achieves more convenience for user operations.

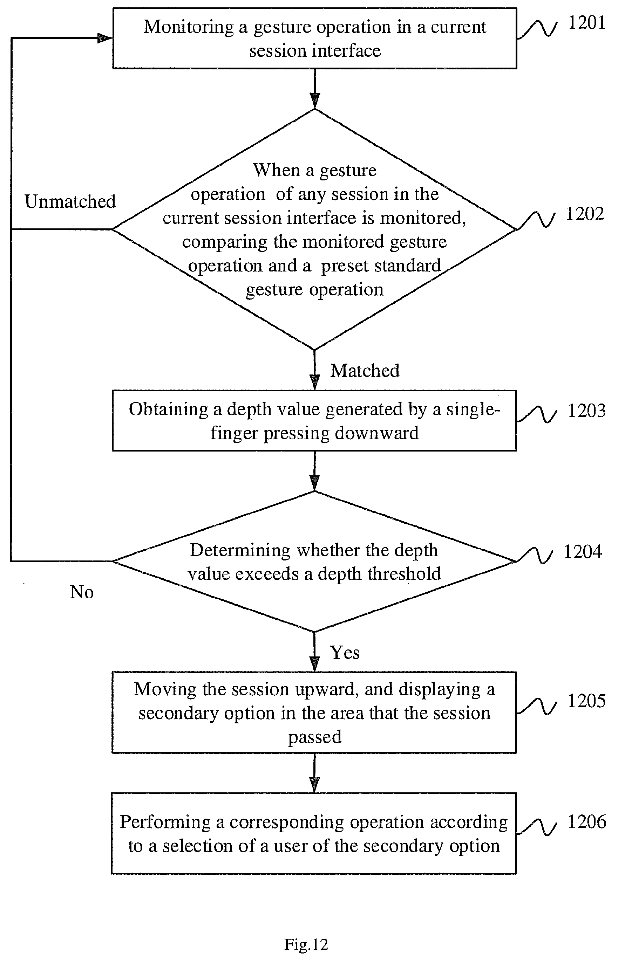

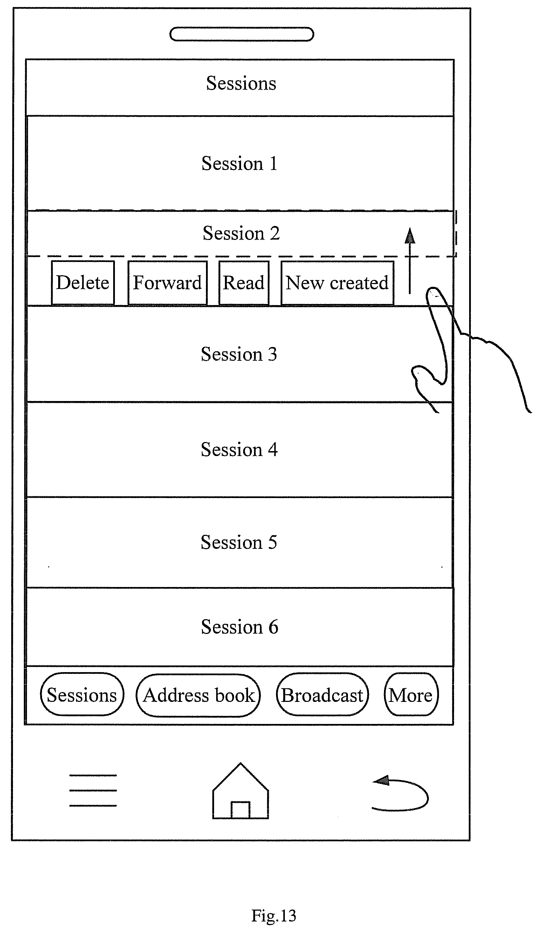

Fig.12 is a flowchart of a method for processing a session based on a gesture operation according to an embodiment of the present invention. Taking a single-finger pressing downward to display a secondary option as an example, the method includes:
in step 1201, monitoring a gesture operation in a current session interface;
in step 1202, when a gesture operation of any session in the current session interface is monitored, comparing the monitored gesture operation and a preset standard gesture operation; when the monitored gesture operation and the preset standard gesture operation match, determining that the a single-finger pressing downward is identified, and performing step 1203; and when the monitored gesture operation and the preset standard gesture operation do not match, determining that the gesture operation is not identified, and performing the step 1201;
in step 1203, obtaining a depth value generated by a single-finger pressing downward;
in step 1204, determining whether the depth value exceeds a depth threshold; when the depth value exceeds the depth threshold, determining that the gesture operation is valid, and performing step 1205; and when the depth value does not exceed the depth threshold, determining that the gesture operation is invalid, and performing the step 1201. Effect picture of this step may be referred to in Fig.7;
in step 1205, moving the session upward, and displaying a secondary option in the area that the session passed; and as shown in Fig.13, the session may be continuously moved upward in its own area, even moved to the top of its own position. In some embodiments, the secondary option may also be displayed using effects such as reversal or gradient.
In step 1206, performing a corresponding operation according to a user's selection of the secondary option. For example, after the secondary option "delete" is selected, the session is deleted from the current session interface.

Therefore, in the method for processing a session based on a gesture operation according to the embodiments of the present invention, a gesture operation in a current session interface is monitored, and a corresponding processing is performed to the session in the current session interface according to the identified gesture operation. Therefore, operations can be performed to a session in a current session interface without entering into the operating interface of the session, which shortens the procedure for processing the session, saves processing time, and achieves more convenience for user operations.

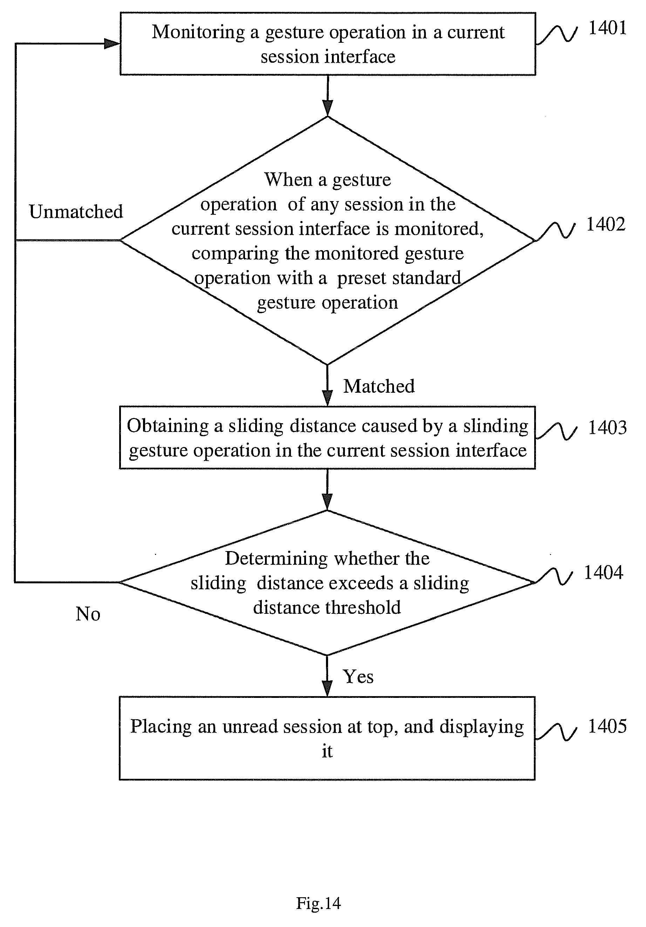

Fig.14 is a flowchart of a method for processing a session based on a gesture operation according to an embodiment of the present invention. Taking a gesture operation of two-fingers sliding downward to place an unread session at top as an example, the method includes:
in step 1401, monitoring a gesture operation in a current session interface;
in step 1402, when a gesture operation of any session in the current session interface is monitored, comparing the monitored gesture operation with a preset standard gesture operation; when the monitored gesture operation and the preset standard gesture operation match, determining that the two-fingers sliding downward is identified, and continuing to perform step 1403; and when the monitored gesture operation and the preset standard gesture operation do not match, determining that the gesture operation is not identified, and performing the step 1401;
in step 1403, obtaining a sliding distance caused by a sliding gesture operation in the current session interface;
in step 1404, determining whether the sliding distance exceeds a sliding distance threshold; when the sliding distance exceeds the sliding distance threshold, determining that the gesture operation is valid, and performing step 1405; and when the sliding distance does not exceed the sliding distance threshold, determining that the gesture operation is invalid, and performing the step 1401; and
in step 1405, placing the unread session at top, and displaying it. When there are a plurality of unread sessions, display sequences of the unread sessions may be arranged in accordance with reception time of the sessions or numbers of unread messages in the sessions. In some embodiments, only a session at an initial position of the gesture operations is placed and displayed at the top.

Therefore, in the method for processing a session based on a gesture operation according to the embodiments of the present invention, a gesture operation in a current session interface is monitored, and a corresponding processing is performed to the session in the current session interface according to the identified gesture operation. Therefore, operations can be performed to a session in a current session interface without entering into the operating interface of the session, which shortens the procedure for processing the session, saves processing time, and achieves more convenience for user operations.

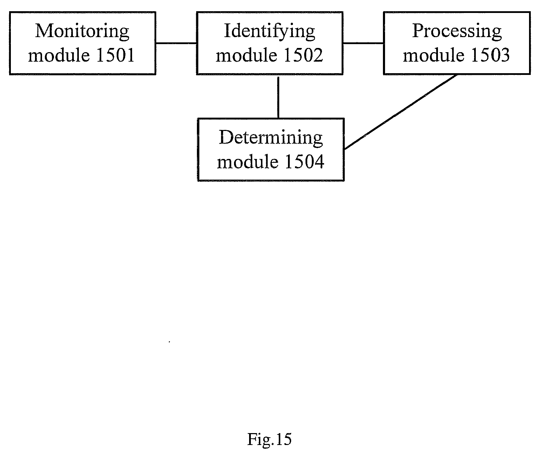

Fig.15 is a functional block diagram of a device for processing a session based on a gesture operation according to an embodiment of the present invention. With reference to Fig.15, the device includes:
a monitoring module 1501 configured to monitor a gesture operation in a current session interface;
an identifying module 1502 configured to identify the gesture operation when a gesture operation of any session in the current session interface is monitored; and
a processing module 1503 configured to perform a corresponding processing on the session in the current session interface according to the identified gesture operation.

In an embodiment, the device further includes a determining module 1504 configured to determine validity of a gesture operation.

In an embodiment, when the gesture operation identified by the identifying module 1502 is to mark the session as read, the processing module 1503 updates a state of the session as read; or
when the gesture operation identified by the identifying module 1502 is to mark the session as to be deleted, the processing module 1503 deletes the session from the current session interface; or
when the gesture operation identified by the identifying module 1502 is to mark the session as to be forwarded, the processing module 1503 pops up a forwarding page of the session; or
when the gesture operation identified by the identifying module 1502 is to mark the session as to be placed at top, the processing module 1503 places the session at top of the current session interface and displays it.

In an embodiment, when a gesture operation identified by the identifying module 1502 is to open a secondary option, the processing module 1503 moves the session in its own area leftward, rightward, upward or downward, and displays the secondary option in the area that the session passed; wherein the secondary option includes an operation option with respect to the session, an operation option with respect to the current interface in which the session is located or an operation option with respect to an application software to which the session belongs.

It is to be explained that when the device for processing a session based on a gesture operation provided by the above embodiments realize the above functions, the division of the above function modules are described only for illustration, and in actual applications, the above functions may be allocated and implemented by different function modules as needed. That is, the internal structure of the apparatus may be divided into different function modules, to realize all or a part of the above-described functions. In addition, the device for processing a session based on a gesture operation and the method for processing a session based on a gesture operation provided by the above embodiments belong to the same inventive concept, and their specific implementing processes may be found in the embodiments of the method, so verbosity is omitted here.

Those skilled in the art could understand that the whole or a part of the steps in the above embodiments may be achieved by hardware, or may be achieved by a program instructing the relevant hardware. The program may be stored in a computer readable storage medium, and the storage medium may be a read only memory, a magnetic disk or an optical disk, etc.

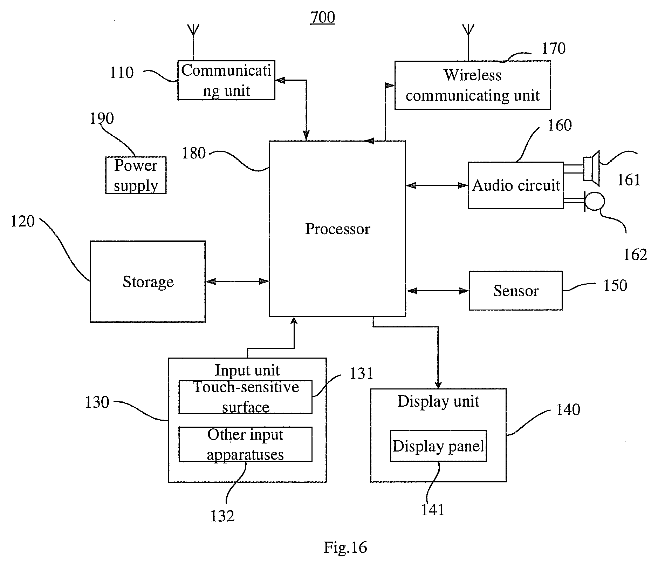

FIG. 16 is an illustrative block diagram of a terminal apparatus according to an embodiment of the present invention. With reference to Fig.16, the terminal apparatus may be used to implement the method for processing a session based on a gesture operation according to the above embodiments. The terminal may be a telephone, a tablet computer (pad), a piece of wearable mobile equipment (such as a smart watch) or the like. Preferably:
a terminal apparatus 700 may include a communication unit 110, a storage 120 comprising one or more computer readable storage mediums, an input unit 130, a display unit 140, a sensor 150, an audio circuit 160, a WiFi (wireless fidelity) module 170, a processor 180 comprising one or more processing cores and a power supply 190 or the like. Those skilled in the art could understand that the structure of a terminal apparatus shown in Fig.16 does not limit the terminal apparatus, and the terminal apparatus may include more or less parts than those of Fig.16, or may combine certain parts, or may have different arrangements of parts.

The communication unit 110 may be used to receive or send signals in reception and sending of information or during a call, and the communication unit 110 may be a network communication apparatus such as an RF (Radio Frequency) circuit, a router, a modulator-demodulator. Particularly, when the communication unit 110 is a RF circuit, after downlink information is received from a base station, the downlink information is processed by one or more processor 180; in addition, uplink data is sent to the base station. Generally, the RF circuit as the communication unit includes an antenna, at least one amplifier, a tuner, one or more oscillators, a subscriber identity module (SIM) card, a transceiver, a coupler, a LNA (Low Noise Amplifier) and a duplexer, etc., but it is not limited thereto. Furthermore, the communication unit 110 may also communicate with a network and other apparatuses by wireless communication. The wireless communication may use any communication standard or protocol including GSM (Global System of Mobile communication), GPRS (General Packet Radio Service), CDMA (Code Division Multiple Access), WCDMA (Wideband Code Division Multiple Access), LTE (Long Term Evolution), E-mail, SMS (Short Messaging Service) or the like, but it is not limited thereto. The storage 120 may be used to store software programs and modules, and the processor 180 executes various kinds of function applications and data processings by operating the software programs and modules stored in the storage 120. The storage 120 may mainly include a program storing area and a data storing area, wherein the program storing area may store an operating system, at least one application program required for functions such as a sound playing function, an image playing function or the like; the data storing area may store data such as audio data and a telephone book, etc., created in accordance with the use of the terminal apparatus 700. Furthermore, the storage 120 may include a high speed random access memory or a nonvolatile memory, or for example, at least one magnetic disk storage device, a flash memory device or other nonvolatile solid-state memory devices. Correspondingly, the storage 120 may also include a storage controller, to provide the processor 180 and the input unit 130 with an access to the storage 120.

The input unit 130 may be used to receive figures or character information that are input, and generate signal input of a keyboard, a mouse, an operating stick, an optical device or a trackball related to user settings and function control. Preferably, the input unit 130 may include a touch-sensitive surface 131 and other input apparatuses 132. The touch-sensitive surface 131 which is also referred to as a touch display screen or a touch panel, may collect touch operations from a user thereon or nearby (for example, operations on the touch-sensitive surface 131 or nearby the touch-sensitive surface 131 by a user using any appropriate object or accessory such as a finger, or a touch pen, etc.), and may drive a corresponding connecting device according to a preset program. Alternatively, the touch-sensitive surface 131 may include two portions of a touch detection device and a touch controller. The touch detection device detects touch orientations of a user, and detects signals brought up by touch operations, then transmits the signals to the touch controller; the touch controller receives touch information from the touch detection device, and converts the touch information into coordinates of touch points to be sent to the processor 180, and the touch controller receives commands sent from the processor 180 and execute the commands. Furthermore, the touch-sensitive surface 131 may be realized by using various types of manners such as resistance-type, capacitance-type, infrared ray and surface acoustic wave. In addition to the touch-sensitive surface 131, the input unit 130 may also include other input apparatuses 132. Preferably, the other input apparatuses 132 may include one or more of a physical keyboard, a function key (such as a volume control key, or a switching key, etc.), a trackball, a mouse and an operating stick, but it is not limited thereto.

The display unit 140 may be used to display information input by a user or information supplied to the user and various kinds of graphical user interfaces of the terminal apparatus 700, and these graphical user interfaces may consist of graph, text, icon, video or any combination thereof. The display unit 140 may include a display panel 141, and alternatively, the display panel 141 may be configured by using LCD (Liquid Crystal Display), OLED (Organic Light-Emitting Diode) or the like. Further, the touch-sensitive surface 131 may cover the display panel 141, and after the touch-sensitive surface 131 detects touch operations thereon or nearby, the touch-sensitive surface 131 transmits the touch operations to the processor 180 to determine types of touch events, subsequently, the processor 180 provides a corresponding visual output on the display panel 141 according to the types of the touch events. In Fig.5, although the touch-sensitive surface 131 and the display panel 141 realize input and output functions as two separate parts, in certain embodiments, the touch-sensitive surface 131 and the display panel 141 may be integrated to realize the input and output functions.

The terminal apparatus 700 may also include at least one kind of sensor 150 such as a light sensor, a motion sensor and other sensors. Preferably, the light sensor may include an ambient light sensor and a proximity sensor, wherein the ambient light sensor may adjust luminance of the display panel 141 according to luminance of ambient light, the proximity sensor may turn off the display panel 141 and/or its backlight when the terminal apparatus 700 moves to an ear. As one of motion sensors, a gravity acceleration sensor may detect values of accelerations in respective directions (usually, three-axis), and may detect a value and a direction of gravity when being static, and may be used in applications for identifying a phone pose (such as switching between horizontal and vertical screens, related games, magnetometer pose calibration), related functions of vibration identification (such as a pedometer, a knock), etc.; the terminal apparatus 700 may also be configured with other sensors such a gyroscope, a barometer, a hygrometer, a thermometer, an infrared sensor, etc., so verbosity is omitted here.

The audio circuit 160, a speaker 161 and a microphone 162 may provide an audio interface between a user and the terminal apparatus 700. The audio circuit 160 may convert received audio data into electrical signals and transmit the electrical signals to the speaker 161, then the speaker 161 converts the electrical signals into sound signals to be output; on the other hand, the microphone 162 converts collected sound signals into electrical signals, the audio circuit 160 receives the electrical signals and converts the electrical signals into audio data, the audio data is output to the processor 180 to be processed, then the audio data is sent to another terminal apparatus through the RF circuit 110, or the audio data is output to the storage 120 to be further processed. The audio circuit 160 may include an earplug jack, to provide communication between a peripheral headset and the terminal apparatus 700.

In order to realize wireless communication, the terminal apparatus may be configured with a wireless communication unit 170, the wireless communication unit 170 may be a WiFi module. WiFi belonging to a short-distance wireless transmission technology, through which the terminal apparatus 700 may assistant a user to receive and send emails, browse webpage and access streaming media, provides the user with wireless broadband Internet access. Although Fig.5 shows the wireless communication unit 170, it shall be understood that the terminal apparatus 700 does not have to include the wireless communication unit 170, and the wireless communication unit 170 can be completely omitted as needed within a scope that does not change the nature of the present invention.

The processor 180 is a control center of the terminal apparatus 700, couples to respective parts of an entire telephone by using various kinds of interfaces and circuits, and executes various kinds of functions of the terminal apparatus 700 and processes data by operating or executing software programs and/or modules stored in the storage 120 and calling data stored in the storage 120, thereby to monitor the entire telephone. Alternatively, the processor 180 may include one or more processing cores; preferably, the processor 180 may integrate an application processor and a modulation-demodulation processor, wherein the application processor mainly processes an operating system, a user interface and an application program, and the modulation-demodulation processor mainly processes wireless communication. It may be understood that the modulation-demodulation processor may not be integrated into the processor 180.

The terminal apparatus 700 also includes the power supply 190 (such as a battery) that supplies power to the respective parts, preferably, the power supply may be logically coupled with the processor 180 by a power supply management system, thereby realizing functions such as management of charging, discharging and power consumption by the power supply management system. The power supply 190 may also include any component such as one or more DC or AC power supplies, recharging systems, power supply failure detection circuits, power supply converters or inverters, power supply state indicators.

Although not shown, the terminal apparatus 700 may also include a camera, or a Bluetooth module, etc., so verbosity is omitted here. Specifically, in the present embodiment, a display unit of the terminal apparatus is a touch screen display, and the terminal apparatus further includes a storage, and one or more programs, wherein the one or more programs are stored in the storage and are configured to be executed by the one or more processors, and the one or more programs include instructions for performing operations of:
monitoring a gesture operation in a current session interface;
identifying the gesture operation, when a gesture operation of any session in the current session interface is monitored; and
performing a corresponding processing on the session in the current session interface according to the identified gesture operation.

In an embodiment, the storage further includes an instruction for performing an operation of: presetting a standard gesture operation and a processing corresponding to the standard gesture operation; and
the step of identifying the gesture operation includes: comparing the monitored gesture operation with the preset standard gesture operation; if the monitored gesture operation and the preset standard gesture operation match, determining that the gesture operation is identified; and if the monitored gesture operation and the preset standard gesture operation do not match, determining that the gesture operation is not identified.

In an embodiment, the storage further includes instructions for performing operations of: after the identifying the gesture operation, the operations further include determining validity of the gesture operation.

In an embodiment, the storage further includes instructions for performing operations of: when the gesture operation is a single-finger sliding leftward, a single-finger sliding rightward, a multi-finger sliding leftward, a multi-finger sliding rightward, a single-finger sliding upward, a single-finger sliding downward, a multi-finger sliding upward or a multi-finger sliding downward, the step of determining the validity of the gesture operation includes:
obtaining a sliding distance of the session in its own area caused by the gesture operation;
determining whether the sliding distance exceeds a sliding distance threshold;
if the sliding distance exceeds the sliding distance threshold, determining that the gesture operation is valid; and
if the sliding distance does not exceed the sliding distance threshold, determining that the gesture operation is invalid.

In an embodiment, the storage further includes instructions for performing operations of: when the gesture operation is a single-finger clicking or a multi-finger clicking, the step of determining the validity of the gesture operation includes:
obtaining a click number of times within a predetermined time of the gesture operation;
determining whether the click number of times of the gesture operation exceeds a click number of times threshold;
if the click number of times exceeds the click number of times threshold, determining that the gesture operation is invalid; and
if the click number of times does not exceed the click number of times threshold, determining that the gesture operation is valid.

In an embodiment, the storage further includes instructions for performing operations of: when the gesture operation is a single-finger pressing or a multi-finger pressing, the step of determining the validity of the gesture operation includes:
obtaining a voltage value generated by the gesture operation; determining whether the voltage value generated by the gesture operation exceeds a voltage threshold; if the voltage value exceeds the voltage threshold, determining that the gesture operation is valid; and if the voltage value does not exceed the voltage threshold, determining that the gesture operation is invalid; or
when a display screen for displaying the current session interface is a flexible screen, obtaining a depth value generated by a pressing gesture operation in a pressing direction; determining whether the depth value generated by the pressing gesture operation exceeds a depth threshold; if the depth value exceeds the depth threshold, determining that the gesture operation is valid; and if the depth value does not exceed the depth threshold, determining that the gesture operation is invalid.

In an embodiment, the storage further includes instructions for performing operations of: the step of performing the corresponding processing on the session in the current session interface according to the identified gesture operation includes:
when the identified gesture operation is to mark the session as read, updating a state of the session as read; or
when the identified gesture operation is to mark the session as to be deleted, deleting the session from the current session interface; or
when the identified gesture operation is to mark the session as to be forwarded, popping up a forwarding page of the session; and
when the identified gesture operation is to mark the session as to be placed at top, placing the session at top of the current session interface and displaying it.

In an embodiment, the storage further includes instructions for performing operations of: the step of performing the corresponding processing on the session in the current session interface according to the identified gesture operation includes:
when the identified gesture operation is to open a secondary option, moving the session in its own area leftward, rightward, upward or downward, and displaying the secondary option in the area that the session passed;
wherein the secondary option includes an operation option with respect to the session, an operation option with respect to the current interface in which the session is located or an operation option with respect to an application software to which the session belongs.

Therefore, in the method, the device and the apparatus for processing a session based on a gesture operation provided by the embodiments of the present invention, a gesture operation in a current session interface is monitored, and a corresponding processing is performed to the session in the current session interface according to the identified gesture operation. Therefore, operations can be performed to a session in a current session interface without entering into the operating interface of the session, which shortens the procedure for processing the session, saves processing time, and achieves more convenience for user operations.

The above contents are only the embodiments of the present invention, which are not used to limit the present invention. Any changes, equal substitution and modifications, etc., within the spirit and principle of the present invention should be included in the protection scope of the present invention.

## Claims

1. A method for processing a session based on a gesture operation, **characterized in that** the method comprises:
monitoring a gesture operation in a current session interface;
when a gesture operation in any session in the current session interface is monitored, identifying the gesture operation; and
performing a corresponding processing on the session in the current session interface according to the identified gesture operation.

2. The method according to claim 1, **characterized in that** the gesture operation includes a single-finger sliding leftward, a single-finger sliding rightward, a multi-finger sliding leftward, a multi-finger sliding rightward, a single-finger sliding upward, a single-finger sliding downward, a multi-finger sliding upward, a multi-finger sliding downward, a single-finger clicking, a multi-finger clicking, a single-finger pressing and/or a multi-finger pressing.

3. The method according to claim 1, **characterized in that** the method further comprises:
presetting a standard gesture operation and a processing corresponding to the standard gesture operation; and
the step of identifying the gesture operation including:
comparing the monitored gesture operation with the preset standard gesture operation;
if the monitored gesture operation and the preset standard gesture operation match, determining that the gesture operation is identified; and
if the monitored gesture operation and the preset standard gesture operation do not match, determining that the gesture operation is not identified.

4. The method according to any one of claims 1 to 3, **characterized in that** after the step of identifying the gesture operation, the method further comprises:
determining validity of the gesture operation.

5. The method according to claim 4, **characterized in that** when the gesture operation is a single-finger sliding leftward, a single-finger sliding rightward, a multi-finger sliding leftward, a multi-finger sliding rightward, a single-finger sliding upward, a single-finger sliding downward, a multi-finger sliding upward or a multi-finger sliding downward, the step of determining the validity of the gesture operation comprises:
obtaining a sliding distance of the session in an own area of the session caused by the gesture operation;
determining whether the sliding distance exceeds a sliding distance threshold;
if the sliding distance exceeds the sliding distance threshold, determining that the gesture operation is valid; and
if the sliding distance does not exceed the sliding distance threshold, determining that the gesture operation is invalid.

6. The method according to claim 4, **characterized in that** when the gesture operation is a single-finger clicking or a multi-finger clicking, the step of determining the validity of the gesture operation comprises:
obtaining a click number of times within a predetermined time of the gesture operation;
determining whether the click number of times of the gesture operation exceeds a click number of times threshold;
if the click number of times exceeds the click number of times threshold, determining that the gesture operation is invalid; and
if the click number of times does not exceed the click number of times threshold, determining that the gesture operation is valid.

7. The method according to claim 4, **characterized in that** when the gesture operation is a single-finger pressing or a multi-finger pressing, the step of determining the validity of the gesture operation comprises:
obtaining a voltage value generated by the gesture operation; determining whether the voltage value generated by the gesture operation exceeds a voltage threshold; if the voltage value exceeds the voltage threshold, determining that the gesture operation is valid; and if the voltage value does not exceed the voltage threshold, determining that the gesture operation is invalid; or
when a display screen for displaying the current session interface is a flexible screen, obtaining a depth value generated by a pressing gesture operation in a pressing direction; determining whether the depth value generated by the pressing gesture operation exceeds a depth threshold; if the depth value exceeds the depth threshold, determining that the gesture operation is valid; and if the depth value does not exceed the depth threshold, determining that the gesture operation is invalid.

8. The method according to claim 1, **characterized in that** the step of performing the corresponding processing on the session in the current session interface according to the identified gesture operation comprises:
when the identified gesture operation is to mark the session as read, updating a state of the session as read; or
when the identified gesture operation is to mark the session as to be deleted, deleting the session from the current session interface; or
when the identified gesture operation is to mark the session to be forwarded, popping up a forwarding page of the session; or
when the identified gesture operation is to mark the session as to be placed at top, placing the session at top of the current session interface and displaying the session.

9. The method according to claim 1, **characterized in that** the step of performing the corresponding processing on the session in the current session interface according to the identified gesture operation comprises:
when the identified gesture operation is to open a secondary option, moving the session in the own area of the session leftward, rightward, upward or downward, and displaying the secondary option in an area that the session passed;
wherein the secondary option includes an operation option with respect to the session, an operation option with respect to the current interface in which the session is located or an operation option with respect to an application software to which the session belongs.

10. A device for processing a session based on a gesture operation, **characterized in that** the device comprises:
a monitoring module configured to monitor the gesture operation in a current session interface;
an identifying module configured to, when a gesture operation in any session in the current session interface is monitored, identify the gesture operation; and
a processing module configured to perform a corresponding processing in the current session interface according to the identified gesture operation.

11. The device according to claim 10, **characterized in that** the device further comprises:
a determining module configured to determine validity of the gesture operation.

12. The device according to claim 10, **characterized in that** when the gesture operation identified by the identifying module is to mark the session as read, the processing module updates a state of the session as read; or
when the gesture operation identified by the identifying module is to mark the session as to be deleted, the processing module deletes the session from the current session interface; or
when the gesture operation identified by the identifying module is to mark the session as to be forwarded, the processing module pops up a forwarding page of the session; or
when the gesture operation identified by the identifying module is to mark the session as to be placed at top, the processing module places the session at top of the current session interface and displays the session.

13. The device according to claim 10, **characterized in that** when the gesture operation identified by the identifying module is to open a secondary option, the processing module moves the session in an own area of the session leftward, rightward, upward or downward, and displays the secondary option in an area that the session passed;
wherein the secondary option includes an operation option with respect to the session, an operation option with respect to the current interface in which the session is located or an operation option with respect to an application software to which the session belongs.

14. A terminal apparatus, **characterized in that** the terminal apparatus comprises a storage and one or more programs, wherein the one or more programs are stored in the storage and are configured to be executed by one or more processors, the one or more programs compress instructions for performing operations of:
monitoring a gesture operation in a current session interface;
when a gesture operation in any session in the current session interface is monitored, identifying the gesture operation; and
performing a corresponding processing on the session in the current session interface according to the identified gesture operation.
